# NEW EUROPEAN PATENT SPECIFICATION

(11) **EP 0 132 756 B2**
(45) Date of publication and mention of the opposition decision: **02.04.1997**
(45) Mention of the grant of the patent: 16.09.1992
(21) Application number: 84108381.9
(22) Date of filing: 17.07.1984
(51) Int. Cl.: C01B 21/04, B01D 53/04

(54) **Nitrogen generator process for the production of low volume of high purity nitrogen from compressed air**
Stickstoff-Generator-Verfahren zur Herstellung von kleinen Volumina hochreinen Stickstoffs aus Pressluft
Procédé générateur d'azote pour la production de volumes bas d'azote très pur à partir d'air comprimé

(30) Priority: 23.07.1983 GB 8319880
(43) Date of publication of application: 13.02.1985
(73) Proprietor: Bergwerksverband GmbH, D-45307 Essen (DE)
(72) Inventor: Ward, Derek Edwin, Hadley Wood Barnet Hertfordshire (GB)
(74) Representative: Schumacher, Horst, Dr. Dipl.-Phys.

(56) References cited:
- GB-A- 1 480 866
- GB-A- 1 529 779
- GB-A- 1 541 767
- GB-A- 2 042 365
- US-A- 3 962 129
- ULLMANNS "Encyklopädie der technischen Chemie" 4th edition 1981,VERLAG CHEMIE, Weinheim volume 20
- ULLMANNS "Encyklopädie der technischen Chemie" 4th edition 1982, VERLAG CHEMIE, Weinheim volume 22

## Description

The invention relates to a process for obtaining a nitrogen rich product gas containing oxygen < 500 v.p.m. from a feed gas containing oxygen and nitrogen, for example air, by means of an adsorber vessel containing carbon molecular sieve. Such nitrogen is used in many applications in industry where the limited presence of oxygen is necessary.

A particular example is the conventional use of nitrogen containing 10 v.p.m. (volumes per million) of oxygen in gas chromotography. In gas chromotography the nitrogen is a carrier gas and oxygen can react with the adsorbent materials used in the separation column. The quantities of nitrogen required are usually about 100 cm³/min and this is usually provided by a cylinder of high purity nitrogen made by the conventional cryogenic process. The purpose of this invention is to provide a low cost alternative to cylinder high purity nitrogen by the production of nitrogen rich product gas from a source of a feed gas containing oxygen and nitrogen, for example compressed air.

A suitable adsorbant material for the separation of nitrogen from air is produced by BERGWERKSVERBAND GMBH, a German Company, of Franz-Fischer-Weg 61, 4300 Essen 13 (Kray), West Germany. The material is an activated coke in which the pores sizes have been modified so that a separation of oxygen and nitrogen can be made, since an oxygen molecule is slightly smaller than a nitrogen molecule. The method of production of this special activated coke known as carbon molecular sieve is documented in several U.K. patents and the BERGWERKSVERBAND process enabling nitrogen to be produced.

The invention concerns a process for extraction of nitrogen from compressed air or other feed gas containing nitrogen and oxygen.

The closest state of the art is the process of GB-A-1 480 866. According to it, a feed gas containing nitrogen and oxygen is supplied in turn to each of two adsorber columns each of which contain carbon molecular sieve and which are connected by a system of valves. In operation the feed gas is first supplied to the base of the first column.

When the maximum pressure has been reached, the supply of feed gas is switched to the second column. At the same time as the pressure is raised in the second column, the nitrogen product gas is allowed to flow from the top of the second column and residual gas rich in oxygen is pumped from the base of the first column. At this stage, the feed gas is again supplied to the first column whilst the second column is vented. In other words, the two parallel columns are alternately pressurised and vented in cycles which range at about 60 seconds. According to the worked examples of GB-A-1 480 866, product nitrogen having a purity of 98,4 to 99.9 % by volume is obtained.

In relation to the prior art known from GB-A-15 41 767, the problem underlying the invention can be seen in developing an improved process for the separation of nitrogen from nitrogen-oxygen mixtures especially compressed air, because a need exists for a source of high purity nitrogen on the laboratory scale especially for gas chromatography.

The solution lies in using the process of claim 1 comprising a combination of features and more especially in using only one adsorber column instead of the two in parallel, the said column being charged at its base with feed gas and when the pressure reaches a predetermined value, a one-way valve at the top of the column is opened and the product nitrogen allowed to flow into an adjacent gas reservoir. After the one-way valve has closed, waste gas is vented from the base of the adsorber column. The cycle can then be repeated. Having regard to the examples quoted later on, which show considerably higher degrees of purity than that obtained in the process known from GB-A-15 41 767, it can be said, that the problem has been plausibly solved.

The feed gas can be supplied at a pressure of 7 bar (gauge), while the product gas in the reservoir can be available at about 6 bar (gauge) and in which each said cycle may last about 500 s.

Two or more of said single adsorber vessels may be utilised in parallel but connected to only one reservoir to give flow continuity of product.

Other prior art, namely GB-A-20 42 365, Ullmann's Encyclopädie der technischen Chemie, Vol. 20, pages 393-4, and Vol. 22, pages 244-5 shows the two-column system where alternate adsorption columns are pressurised and vented.

That means, that two adsorber columns and not only one adsorber column need be present. In said state of the art no reference can be found product gas being discharged through a one-way valve to a simple nitrogen reservoir. The fact that claim 3 presently on file relates to the presence of two or more such adsorber columns in parallel does not affect this distinction since each such column would also be discharged via a one-way valve into a nitrogen reservoir, not into a parallel adsorber column.

The feed gas may be air or a gas of higher nitrogen content than air.

The invention will be described further, by way of example, with reference to the accompanying drawing, in which:

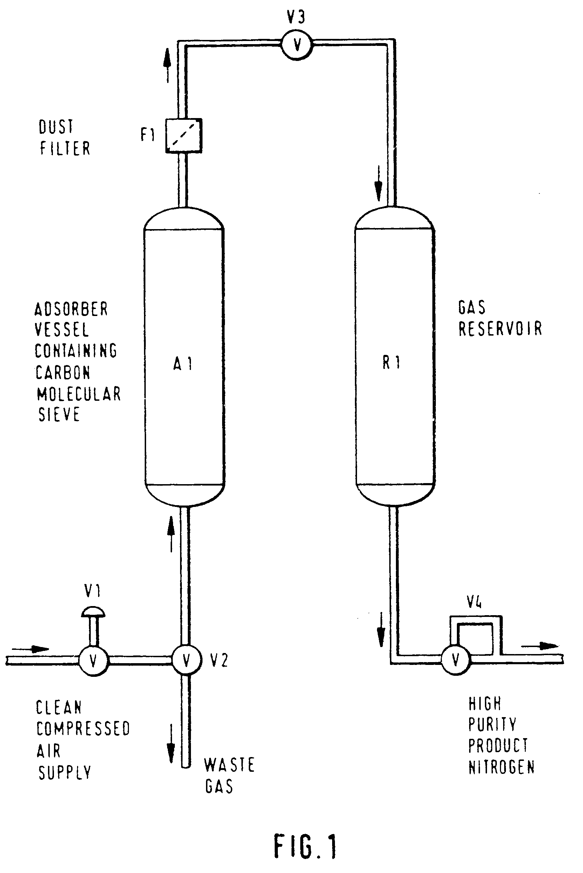

- Figur 1: shows a schematic of the process flow diagram. In this case the feed gas is air.

A supply of compressed air in the range 4 - 15 bar (gauge) is supplied either from an existing source or a special compressor. The air must be free of oil and water droplets and this can be done by special proprietary filters and separator systems so a dry or oil lubricated air compressor can be used. The compressed air flows at a mass flow controlled rate through a valve V1 and via a three way valve V2 into an adsorber vessel A1.

The pressure in the adsorber vessel is allowed to rise very slowly over a period typically of about 500 s, and when the pressure reaches the pressure of a reservoir R1, a small quantity of nitrogen rich product gas will pass through a filter F1 via a non-return valve V3 into the reservoir R1 towards the end of the cycle time. Typically the air will be at 7 bar (gauge) and the production nitrogen will be available at about 6 bar (gauge) and its usage pressure controlled by a pressure reducing valve V4.

After the 500 s pressure raising and production time the valve V2 is sent a signal altering the flow direction so that the supply of compressed air to the vessel A1 is cut-off and the gas in the vessel A1, essentially a mixture of oxygen and nitrogen, is vented to atmosphere for a similar period such as 500 s. The process is then repeated so that every 500 s the vessel A1 is alternately pressurised and vented in sequence. In order to give continuity of nitrogen gas supply, the reservoir R1 is sized so that the pressure does not fall below the minimum required for a given usage pattern.

### Examples

If the adsorber vessel A1 contains 16 litres of the standard carbon molecular sieve from BERGWERKSVERBAND for the O₂/N₂ separation, and is supplied with compressed air at 7 bar (gauge) at a flow controlled rate, the production rate is 300 cm³/min. of nitrogen containing 10 v.p.m. of oxygen. The adsorber cycle time is 520 s on stream and 520 s off stream.

The same adsorber, under the same conditions can produce 700 cm³/min. of nitrogen containing not more than 100 v.p.m. of oxygen or 3000 cm³/min. containing not more than 500 v.p.m. of oxygen.

The main area of application of the invention is the low capital cost replacement of high purity nitrogen (less than 10 v.p.m.) conventionally supplied by cylinders. Other applications are anticipated for different purities but the main case will be in gas chromotography and similar applications.

## Claims

1. Adsorption process for obtaining nitrogen rich product gas containing oxygen <500 v.p.m. from a feed gas containing oxygen and nitrogen, the process comprising the combination of the following features:
a) using a pressure swing process for obtaining nitrogen rich product gas by means of an adsorber vessel containing carbon molecular sieve for the separation of nitrogen and oxygen molecules, comprising repeated cycles of pressurisation at a mass flow-controlled rate - including adsorption and product gas winning - and of venting for desorption by pressure reduction;
b) operating said pressure swing process by pressurisation and venting of a single adsorber vessel connected with a nitrogen reservoir by a non-return valve and controlling the pressure of said nitrogen reservoir by a pressure reducing valve;
c) operating said pressurisation cycle in the range 40 to 1000s during which the feed gas at first is supplied at a flow controlled rate at a pressure of 4 to 15 bar (gauge) into the single adsorber vessel so as to allow the pressure in the adsorber vessel to rise very slowly and towards the end of cycle time product gas is allowed to flow into the nitrogen reservoir, and
d) operating said venting cycle in the range 40 to 1000s for desorption by pressure reduction.

2. A process as claimed in claim 1, in which the feed gas is supplied at a pressure of 7 bar (gauge), while the product gas in the reservoir is available at about 6 bar (gauge) and in which each said cycle lasts about 500 s.

3. A process as claimed in claim 1 or 2, in which two or more of the said single adsorber vessel are utilised in parallel.

## Patentansprüche

1. Adsorptionsverfahren zur Gewinnung eines stickstoffreichen Produktgases mit einem Sauerstoffgehalt von < 500 v.p.m. aus einem Sauerstoff und Stickstoff enthaltenden Einsatzgas, wobei das Verfahren die folgenden Merkmale kombiniert:
a) Anwendung eines Druckwechselverfahrens zur Gewinnung eines stickstoffreichen Produktgases mit Hilfe eines Adsorberbehälters, der mit einem Kohlenstoffmolekularsieb zur Trennung von Stickstoff- und Sauerstoffmolekülen gefüllt ist, mit wiederholten Zyklen der Druckerhöhung bei mengenflußgesteuertem Durchsatz - einschließlich Adsorption und Produktgasgewinnung - und der Entspannung zur Desorption durch Druckverminderung.
b) Betreiben des genannten Druckwechselverfahrens durch Druckerhöhung und Entspannung eines einzelnen Adsorberbehälters, der über ein Rückschlagventil mit einem Stickstoffspeicher verbunden ist und Steuerung des Drucks im genannten Stickstoffspeicher mit Hilfe eines Druckminderventils.
c) Betreiben des genannten Druckerhöhungszyklus über einen Zeitraum von 40 - 1000 s, während dessen das Einsatzgas zunächst mengenflußgesteuert bei einem Druck von 4 - 15 bar (Überdruck) dem einzelnen Adsorbergefäß derart zugeführt wird, daß der Druck im Adsorberbehälter sehr langsam steigt, und gegen Ende der Zykluszeit das Produktgas in den Stickstoffspeicher strömen kann und
d) Betreiben des genannten Entspannungszyklus in einem Zeitraum zwischen 40 und 1000 s zur Desorption durch Druckverminderung.

2. Ein Verfahren nach Anspruch 1, in dem das Einsatzgas bei einem Druck von 7 bar (Überdruck) zugeführt wird, während das Produktgas im Speicher mit einem Druck von etwa 6 bar (Überdruck) ansteht und in dem jeder genannte Zyklus etwa 500 s dauert.

3. Ein Verfahren nach Anspruch 1 oder 2, in dem zwei oder mehr der genannten einzelnen Adsorbergefäße parallel verwendet werden.

## Revendications

1. Procédé d'adsorption en vue d'obtenir un gaz produit enrichi en azote contenant de l'oxygène inférieur à 500 v.p.m. à partir d'un gaz de départ contenant de l'oxygène et de l'azote, le procédé comprenant la combinaison des caractéristiques suivantes :
a) recours à un procédé à pressions alternées afin d'obtenir un produit gazeux riche en azote au moyen d'un récipient d'adsorption comprenant un tamis moléculaire de carbone pour la séparation de molécules d'azote et d'oxygène, comprenant des cycles répétés de pressurisation à un taux contrôlé de débit massique, - y compris l'adsorption et la récupération du gaz produit - et de purge de désorption par réduction de pression;
b) appliquer ledit procédé à pressions alternées par pressurisation et purge d'un récipient d'adsorption unique relié à un réservoir d'azote par une vanne anti-retour et en contrôlant la pression dudit réservoir d'azote par une vanne de réduction de pression;
c) effectuer ledit cycle de mise sous pression dans la plage de durée de 40 à 1000 secondes, période au cours de laquelle le gaz de départ est d'abord introduit à une vitesse contrôlée d'écoulement, a une pression de 4 à 15 bars (manomètre) dans l'unique récipient d'adsorption de manière à permettre à la pression d'augmenter dans le récipient d'adsorption, très lentement, tandis que vers la fin de la période du cycle on permet au gaz produit de s'écouler dans le réservoir d'azote, et
d) effectuer ledit cycle de purge dans une plage de durée de 40 à 1000 secondes en vue de la désorption par réduction de pression.

2. Procédé selon la revendication 1, dans lequel le gaz de départ est fourni à une pression de 7 bars (manomètre), tandis que le gaz produit situé dans le réservoir est disponible à environ 6 bars (manomètre), et dans lequel chacun desdits cycles dure environ 500 secondes.

3. Procédé selon la revendication 1 ou 2, dans lequel deux ou plus de deux des récipients simples d'adsorption sont utilisés en parallèle.
